# EUROPEAN PATENT SPECIFICATION

(11) **EP 4 553 126 B1**
(45) Date of publication and mention of the grant of the patent: **09.09.2026**
(21) Application number: 24202033.7
(22) Date of filing: 23.09.2024
(51) Int. Cl.: C09J 123/06, C08L 23/08

(54) **WATER-BASED HOT-MELT ADHESIVE AND NONWOVEN COATED WITH THE WATER-BASED HOT-MELT ADHESIVE**
SCHMELZKLEBSTOFF AUF WASSERBASIS UND MIT DEM SCHMELZKLEBSTOFF AUF WASSERBASIS BESCHICHTETER VLIESSTOFF
ADHÉSIF THERMOFUSIBLE À BASE D'EAU ET NON-TISSÉ REVÊTU DE L'ADHÉSIF THERMOFUSIBLE À BASE D'EAU

(30) Priority: 09.11.2023 TW 112143274; 27.06.2024 TW 113124133
(43) Date of publication of application: 14.05.2025
(73) Proprietor: BenQ Materials Corporation, Taoyuan City (TW)
(72) Inventor: LIN, Yen-Ling, Taoyuan City (TW); WANG, Tze-Chi, Taoyuan City (TW); CHEN, Ching-Huang, Taoyuan City (TW)
(74) Representative: Murgitroyd & Company

(56) References cited:
- CN-A- 108 587 521
- CN-A- 112 961 639
- CN-A- 114 045 144

## Description

### BACKGROUND

### Field of Invention

This invention relates to a water-based hot-melt adhesive for forming a hot-melt adhesive coating layer on healthcare device packaging for heat sealing. The hot-melt adhesive coating layer prepared by the present water-based hot-melt adhesive provides sufficient seal strength and weatherability without affecting the gas-permeability and peelability required by the healthcare device packaging.

### Description of Related Art

Healthcare device packaging is used to provide a microbial barrier to keep the healthcare device in a sterilized environment after sterilization and before use. The healthcare devices are commonly sterilized after packaging, the sterilization are steam sterilization, ethylene oxide (EO) sterilization or radiation sterilization. Different sterilization requires different packaging materials. For example, the packaging material for EO sterilization and steam sterilization has to provide gas-permeability to assure the steam and EO gas passing through the packaging material to reach the healthcare devices for sterilization. In the existing art, the common materials which provide good microbial barrier effect and gas-permeability are medical paper or breathable polyethylene non-woven fabrics made by melt-blown method, such as DuPont Tyvek^{®}.

The healthcare device packaging material is processed by heat sealing, that is, to heat seal a breathable material, such as a medical paper or gas-permeable polyethylene film, with a plastic film or a plastic packaging tray at the peripheral edge thereof. In addition to gas-permeability, the medical packaging material is required to have sufficient het seal strength and peelability. The insufficient heat seal strength of the material will cause the poor sealing of healthcare device packaging, which may result in the packaging broken due to high gas pressure in the sterilization. Also, excessive heat seal strength may make the packaging difficult to be peeled open or result in the occurrence of fiber tear to contaminate the healthcare devices when peeling open the packaging.

The heat-sealing adhesives commonly used in medical gas-permeable material is hot-melt adhesive. The conventional hot-melt adhesive is prepared by melting and blending thermoplastic resins, tackifiers, waxes, fillers, plasticizers, antioxidants and additives, and casting into the form of granule, strip, sheet or film for use and further, is applied by heat pressing or hot melting. The conventional preparation process is complicated. For example, CN108587521A describes an aqueous heat-seal adhesive for medical dialyzing paper, which is prepared by blending thermoplastic resin, resin tackifiers, waxes, emulsifiers and additives at 120°C to prepare a hot-melt adhesive coating liquid and the coating liquid is coated on medical paper or non-woven fabric to form a heat-seal layer for providing high seal strength. However, the adhesive strength provided by the heat-seal layer of the healthcare packaging is too high, it may lead the packaging damage when the packaging is peeled open to result in fiber tear when peeling open the packaging, which may contaminate the packaged device. CN110591602A describes a paper lid for a medical packaging tray coated with a surface adhesive layer and a primer layer with different compositions, wherein the adhesion between the surface adhesive layer and the primer layer is less than the adhesion between the surface adhesive layer of the paper lid and the packaging tray to make the paper lid and packaging tray to be easily peeled apart without damaging the paper lid. However, the two coating layers on the paper lid increases the manufacture inconvenience. Furthermore, CN108441149A describes a two-step process for preparing a hot-melt adhesive used as a heat seal layer on the medical packaging material. The preparation process comprises of mixing and blending thermoplastic resin, resin tackifiers and waxes at a temperature more than 160°C to form hot-melt powders, and then the powders emulsified and dispersed in polyacrylic acid emulsion to prepare a coating liquid. The two-step preparation process increases the manufacture complication.

Furthermore, because medical devices commonly require a shelf life of more than five years, the heat sealability provided by hot-melt adhesive used in the healthcare device packaging may increase or decrease due to ambient temperature change during storage or transportation. The heat sealability change may result in the difficulty to peel open the packaging, the fiber pulled off from the packaging material or the packaging broke.

The present invention is to provide a water-based hot-melt adhesive for forming a coating layer on healthcare packaging materials to provide the healthcare packaging materials sufficient gas-permeability and weatherability. After being heat sealed with a flexible sheet material or a blister container at the peripheral edges thereof, the water-based hot-melt adhesive coated healthcare packaging materials provide reliable seal strength and peelability.

### SUMMARY

The present invention is to provide a water-based hot-melt adhesive for healthcare packaging, which can form a coating layer on a medical polyolefin spunbonded nonwoven fabric for heat sealing with flexible sheets or blister containers at the peripheral edges thereof while maintaining the coated nonwoven fabric with sufficient gas-permeability for steam sterilization or ethylene oxide (EO) sterilization and seal stability and providing sufficient reliable seal strength and peelability. The water-based hot-melt adhesive of the present invention can be prepared without blending step as required for preparing the conventional hot-melt adhesive, but provide sufficient seal strength and gas-permeability for the healthcare packaging after application. Furthermore, when peeling open the heat sealing area of the healthcare packaging, the water-based hot-melt adhesive layer is cleanly split to reduce the fiber tear occurred at the non-woven fabric which may cause contamination.

The disclosed water-based hot-melt adhesive comprises 20 weight parts to 60 weight parts of hydrophilic-modified water-based polyolefin resin; 1 weight parts to 30 weight parts of water-based ionomer; 10 weight parts to 30 weight parts of wax particles; and 10 weight parts to 30 weight parts of tackifier particles. The term "weight parts" refers to weights of solely the resin, ionomer, wax particles or tackifier particles.

In an embodiment of the present invention, the total amount of the wax particles and the tackifier particles is from 30wt% to 55wt% of the total weight of the water-based hot-melt adhesive.

In a preferred embodiment of the present invention, the water-based hot-melt adhesive preferably comprises 24 weight parts to 58 weight parts of hydrophilic-modified water-based polyolefin resin; 2 weight parts to 28 weight parts of water-based ionomer; 15 weight parts to 27 weight parts of wax particles; and 15 weight parts to 27 weight parts of tackifier particles; wherein the total amount of the wax particles and the tackifier particles is from 32wt% to 53wt% of the total weight of the water-based hot-melt adhesive.

In an embodiment of the present invention, the particle size (D50) of the wax particles can be from 3 µm to 20 µm and preferably is from 3 µm to 15 µm.

In an embodiment of the present invention, the particle size (D50) of the tackifier particles can be from 3 µm to 35 µm and preferably is from 5 µm to 30 µm.

In an embodiment of the present invention, the weight ratio of the wax particles and the tackifier particles is in the range of from 0.6:1 to 3:1.

In an embodiment of the present invention, the glass transition temperature (Tg) of the hydrophilic-modified water-based polyolefin resin is less than 0°C and the melting point thereof is more than 90°C, the glass transition temperature (Tg) of the water-based ionomer is less than 0°C and the melting point thereof is more than 80°C, the glass transition temperature (Tg) of the wax particles is less than 0°C and the melting point thereof is from 70°C to 180°C, the glass transition temperature (Tg) of the tackifier particle is more than 0°C and the melting point thereof is from 90°C to 160°C.

In an embodiment of the present invention, the glass transition temperature (Tg) of the disclosed water-based hot-melt adhesive is from -120°C to -50°C.

In an embodiment of the present invention, the hydrophilic-modified water-based polyolefin resin can be, such as, hydrophilic-modified water-based polyethylene resin, hydrophilic-modified water-based polypropylene resin, hydrophilic-modified water-based polybutylene resin, water-based oxidized polyethylene resin or the combinations thereof.

In an embodiment of the present invention, the water-based ionomer can be, such as, polyethylene ionomer, polypropylene ionomer, polyurethane ionomer, polystyrene butadiene ionomer or the combinations thereof.

In an embodiment of the present invention, the wax particles can be, such as Fischer-Tropsch synthetic wax particles, polypropylene wax particles, polyethylene wax particles, oxidized polyethylene wax particles, microcrystalline wax particles, or the combinations thereof.

In an embodiment of the present invention, the tackifier particles can be, such as C5 petroleum resin micropowders, C9 petroleum resin micropowders, C5/C9 copolymerized petroleum resin micropowders, or the combinations thereof.

In another embodiment of the present invention, the water-based hot-melt adhesive can further comprise water-based paraffin.

In another embodiment of the present invention, the water-based hot-melt adhesive can comprise 1 weight parts to 10 weight parts of the water-based paraffin.

In another aspect, the present invention is to provide a water-based hot-melt adhesive coated nonwoven fabric comprising a polyolefin spunbonded nonwoven fabric substrate and a water-based hot-melt adhesive coating formed on at least one side of the polyolefin spunbonded nonwoven fabric substrate, wherein the water-based hot-melt adhesive for the water-based hot-melt adhesive coating comprises 20 weight parts to 60 weight parts of hydrophilic-modified water-based polyolefin resin; 1 weight parts to 30 weight parts of water-based ionomer; 10 weight parts to 30 weight parts of wax particles; and 10 weight parts to 30 weight parts of tackifier particles. The term "weight parts" refers to weights of solely the resin, ionomer, wax particles or tackifier particles.

The disclosed gas-permeability of water-based hot-melt adhesive coated nonwoven fabric is less than 170 seconds and the seal strength thereof is greater than 265 g/15 mm.

In the disclosed water-based hot-melt adhesive coated nonwoven fabric, the coating amount of the water-based hot-melt adhesive on the polyolefin spunbonded nonwoven fabric substrate is from 10 g/m² to 20 g/m².

The above and other aspects of the invention will become better understood with regard to the following detailed description of the preferred but non-limiting embodiment(s). These and other aspects of the invention will become apparent from the following description of the presently preferred embodiments. The detailed description is merely illustrative of the invention and does not limit the scope of the invention, which is defined by the appended claims and equivalents thereof. As would be obvious to one skilled in the art, many variations and modifications of the invention may be affected without departing from the spirit and scope of the novel concepts of the disclosure.

### DETAILED DESCRIPTION

The detailed description provided below in connection with the appended drawings is intended as a description of the present examples and is not intended to represent the only forms in which the present example may be constructed or utilized. The description sets forth the functions of the example and the sequence of steps for constructing and operating the example. However, the same or equivalent functions and sequences may be accomplished by different examples.

In the following description, numerous specific details are described in detail in order to enable the reader to fully understand the following examples. However, embodiments of the present invention may be practiced in case no such specific details.

Unless defined otherwise, all technical and scientific terms used herein have the same meaning as commonly understood by one of ordinary skill in the art to which this invention belongs. Generally, the nomenclature used herein and the laboratory procedures are well known and commonly employed in the art. Conventional methods are used for these procedures, such as those provided in the art and various general references. Where a term is provided in the singular, the inventors also contemplate the plural of that term. The nomenclature used herein and the laboratory procedures described below are those well-known and commonly employed in the art.

The present invention is to provide a water-based hot-melt adhesive for healthcare packaging, which comprises 20 weight parts to 60 weight parts of hydrophilic-modified water-based polyolefin resin; 1 weight parts to 30 weight parts of water-based ionomer; 10 weight parts to 30 weight parts of wax particles; and 10 weight parts to 30 weight parts of tackifier particles. The term "weight parts" refers to weights of solely the resin, ionomer, wax particles or tackifier particles.

The disclosed water-based hot-melt adhesive can be coated on the surface of the polyolefin spunbonded nonwoven fabric after adding water as solvent and dried at elevated temperature to obtain a water-based hot-melt adhesive coated nonwoven fabric. The water-based hot-melt adhesive coated nonwoven fabric can provide sufficient gas-permeability after heat sealing with a flexible sheet or a blister container at the peripheral edges thereof to maintain sufficient gas-permeability for steam sterilization or ethylene oxide (EO) sterilization. Furthermore, the disclosed water-based hot-melt adhesive provides reliable heat sealing, peelability and weatherability. The healthcare packaging with the disclosed water-based hot-melt adhesive can still meet the heat seal strength required by the healthcare packaging after the reliability test. In addition, when peeling open the healthcare packaging, the packaging will be opened at the seal area by cleanly splitting the water-based hot-melt adhesive layer to maintain the seal stability and reduce the occurrence of fiber tear contamination.

The disclosed water-based hot-melt adhesive comprises hydrophilic-modified water-based polyolefin resin and water-based ionomer. Due to the presence of polar functional groups, the intermolecular forces are enhanced to make the structure of the heat sealed area stable. Therefore, this hot-melt adhesive exhibits good weatherability.

The disclosed the water-based hot-melt adhesive is prepared by adding water-based ionomer, wax particles, tackifier particles and water as solvent into hydrophilic-modified water-based polyolefin resin, evenly mixing and dispersing to form a water-based hot-melt adhesive. The water-based hot-melt adhesive can be a coating solution for subsequently coating step. The coating solution is coated on a substrate and dried at elevated temperature to evaporate the solvent for forming a water-based hot-melt adhesive coating layer. The obtained water-based hot-melt adhesive coating layer can be heated to 90°C to 150°C to conduct a heal sealing step. The preparation process of the water-based hot-melt adhesive of the present invention do not need the blending step required in the conventional hot-melt adhesive preparation method but provide sufficient seal strength and gas-permeability and good weatherability for the healthcare packaging after application.

In a preferred embodiment of the present invention, the water-based hot-melt adhesive preferably comprises 24 weight parts to 58 weight parts of hydrophilic-modified water-based polyolefin resin, 2 weight parts to 28 weight parts of water-based ionomer, 15 weight parts to 27 weight parts of wax particles and 15 weight parts to 27 weight parts of tackifier particles. If amount of the water-based ionomer is less, the weatherability of the prepared healthcare packaging will be affected. If the amount of the water-based ionomer is excessive, the gas-permeability of the prepared healthcare packaging is insufficient.

In an embodiment of the present invention, the total amount of particles, that the total amount of the wax particles and the tackifier particles, is from 30wt% to 55wt% of the total weight of the water-based hot-melt adhesive, and preferably is from 32wt% to 52wt% of the total weight of the water-based hot-melt adhesive. If the total amount of particles is less, the gas-permeability of the prepared healthcare packaging is insufficient, if the total amount of the particle is excessive, the seal strength of the prepared healthcare packaging will be decreased.

The disclosed water-based hot-melt adhesive uses hydrophilic-modified water-based polyolefin resin as hot-melt adhesive base, the adhesion of the water-based hot-melt adhesive coating layer formed thereby to a polyolefin spunbonded nonwoven fabric substrate is high. Because the polyolefin resin is low polarity material, as the water-based hot-melt adhesive coated nonwoven fabric is heat sealed with a flexible packaging material, such as polyethylene substrate or polypropylene substrate, the difference of the surface polarity of the fabric and the packaging material is small, the adhesion of the seal interface is high to provide a heat seal stability and reduce the fiber tear when peeling apart the non-woven fabric substrate.

The hydrophilic-modified water-based polyolefin resin can be, for example, polyolefin modified by unsaturated carboxylic acid or the anhydride thereof, or polyolefin resin with surfactant. The glass transition temperature (Tg) of the hydrophilic-modified water-based polyolefin resin used in the disclosed water-based hot-melt adhesive is less than 0°C and the melting point thereof is more than 90°C and preferably, the glass transition temperature thereof is less than -100°C and the melting point thereof is more than 120°C. The hydrophilic-modified water-based polyolefin resin used in the present invention can be, for example, water-based polyethylene resin, water-based polypropylene resin, water-based polybutylene resin or water-based oxidized polyethylene resin, but not limited thereto. The water-based hot-melt adhesive can use one or one more hydrophilic-modified water-based polyolefin resin as the hot-melt adhesive base.

The hydrophilic-modified water-based polyolefin resin suitably used in the disclosed water-based hot-melt adhesive can be commercial products, such as, for example, ALTRIX WPE-09838 from Kelly Chemicals Co., Taiwan; Arrowbase SB-1030N from Unitika Ltd. Japan; HME-118-B from MICA Corp., US, but not limited thereto.

The weatherability of the disclosed water-based hot-melt adhesive can be enhanced by adding water-based ionomer. The ionomer refers to a polymer that contains copolymers of ethylene and (meth)acrylic acid as a main chain with metal ions bonded to the main chain and is crosslinked by ionic bonds between molecules. The glass transition temperature (Tg) of the water-based ionomer suitably used in the present invention is less than 0°C and the melting point thereof is more than 80°C and preferably, the glass transition temperature (Tg) is less than -100°C and the melting point is more than 85°C. The suitable water-based ionomers can be, such as, for example, water-based polyethylene ionomer, water-based polypropylene ionomer, polyurethane ionomer, polystyrene butadiene ionomer or combinations thereof, but not limited thereto. The water-based hot-melt adhesive of the present invention can use one or one more water-based ionomers.

The suitable water-based ionomer can be commercial products, such as, for example, Chemipearl^{™} S300, S500 from Mitsui Chemicals Inc., Japan; Surlyn^{®} thermoplastic ionomer from DuPont de Nemours, Inc., US, but not limited thereto.

The wax particles used in the disclosed water-based hot-melt adhesive are to decrease the melt viscosity and surface tackiness of the water-based hot-melt adhesive and adjust the fluidity and wettability but not significantly to decrease the adhesion of the water-based hot-melt adhesive. Furthermore, for enhancing the gas-permeability of the disclosed water-based hot-melt adhesive coating layer on the polyolefin spunbonded nonwoven fabric substrate, the particle size (D50) of the wax particles can be from 3 µm to 20 µm and preferably is from 3 µm to 15 µm.

The wax particles suitably used in the disclosed water-based hot-melt adhesive has a glass transition temperature (Tg) less than 0°C and a melting point from 70°C to 180°C. The suitable wax particles can be commercially obtained, such as Fischer-Tropsch synthetic wax particles, polypropylene micronized wax particles, polyethylene micronized wax particles, oxidized polyethylene wax particles, microcrystalline wax particles or the combinations thereof, but not limited thereto. The suitable Fischer-Tropsch synthetic wax particles can be, for example, Sasolwax Spray 30-G, Spray 30G-M, Spray 30G-EF, Spray 105, Spray 105-G, Spray 105G-EF, Sasolwax Aqua 30-G, Aqua 30G-EF commercially obtained from Sasol Ltd., South Africa. The suitable polypropylene micronized wax particles can be, such as, CERAFLOUR^{®} 913 and CERAFLOUR^{®} 914 commercially obtained from BYK-Chemie GmbH, Germany, or CERETAN^{®} MP2120 commercially obtained from Münzing Chemie GmbH, Germany. The suitable polyethylene micronized wax particles can be, such as, CERAFLOUR^{®} 925, CERAFLOUR^{®} 929N commercially obtained from BYK-Chemie GmbH, Germany, CERETAN^{®} MO4715 commercially obtained from Münzing Chemie GmbH, Germany.

The tackifier used in the disclosed water-based hot-melt adhesive is for decreasing the melt viscosity of the water-based hot-melt adhesive, increasing the wettability and initial adhesion to the adherent and adjusting the heat resistance temperature of the hot-melt adhesive. The disclosed water-based hot-melt adhesive uses tackifier particles to achieve a high total amount of particles in order to enable the coating layer formed by the water-based hot-melt adhesive on the medical polyolefin spunbonded nonwoven fabric to provide satisfied interstices but still maintain the desired seal strength and adhesion to the non-woven fabric.

For providing satisfied gas-permeability and seal strength to the adhesive coating layer form by the disclosed water-based hot-melt adhesive on the polyolefin spunbonded nonwoven fabric substrate, the particle size (D50) of the tackifier particles in the disclosed water-based hot-melt adhesive is similar to the particle size (D50) of the wax particles and can be from 3 µm to 35 µm and preferably from 5 µm to 30 µm. The glass transition temperature (Tg) of the tackifier particles is more than 0°C and the melting point thereof is from 90°C to 160°C. In the disclosed water-based hot-melt adhesive, the amount of the tackifier particles can be adjusted according to the amount of wax particles to make up the total amount of particles, that is the total amount of the tackifier particles and the wax particles, to be from 30wt% to 55wt% of the water-based hot-melt adhesive, and preferably to be from 32wt% to 52wt%. The weight ratio of the wax particles and the tackifier particles is from 0.6:1 to 3:1. If the amount of the wax particles is less, the adhesive coating layer cannot be even split. If the amount of the wax particles is excess, the seal strength of the adhesive coating layer is insufficient.

The tackifier particles suitably used in the disclosed water-based hot-melt adhesive can be petroleum resin micropowders or hydrogenated petroleum resin micropowders with melting point more than 90°C, for example, C5 petroleum resin micropowders, C9 petroleum resin micropowders, C5/C9 copolymerized petroleum resin micropowders, hydrogenated C9 petroleum resin micropowders or the combinations thereof, for example, the commercial products, Wingtack^{®} 95, Wingtack^{®} 98, Wingtack^{®} STS, Wingtack^{®} Extra, Cleartack^{®} W-90, Cleartack^{®} W-110, Cleartack^{®} W-120 and Cleartack^{®} W-140 sold by Cray Valley Ltd., US; the commercial products, Regalite^{™} R1090 and Regalite^{™} R1125 sold by Synthomer Co., UK; the commercial products, YL-90 and YL-120H sold by Yuen Liang Ind. & Co., Ltd., Taiwan, but not limited thereto.

In another embodiment of the present invention, the water-based hot-melt adhesive can further comprise a water-based paraffin for enhancing the gas-permeability of the water-based hot-melt adhesive coating layer formed thereby. If excessive amount of the water-based paraffin in the water-based hot-melt adhesive is present, the seal strength of the coating layer is insufficient. In still another embodiment of the present invention, the water-based hot-melt adhesive can optionally further comprise from 1 weight part to 10 weight parts of water-based paraffin. The water-based paraffin suitably used in the disclosed water-based hot-melt adhesive can be paraffin-based wax emulsion with solid content of from 40% to 60% and melting point of less than 70°C, for example, AQUACER 494 or AQUACER 497 commercially obtained from BYK-Chemie GmbH, Germany.

The disclosed water-based hot-melt adhesive can further comprise additives, such as wetting dispersing agent, defoaming agent, and thickeners to enhance the coating processability of the water-based hot-melt adhesive; antioxidants, UV stabilizers, antibacterial agents, antistatic agents to increase the functionality of water-based hot-melt adhesives. The types and amounts of the additives can be properly selected by person skilled in the related art in accordance with the practical requirements of the hot-melt sealing film.

In another aspect, the present invention is to provide a water-based hot-melt adhesive coated nonwoven fabric which comprises a polyolefin spunbonded nonwoven fabric substrate and a water-based hot-melt adhesive described above coated on at least one surface of the polyolefin spunbonded nonwoven fabric substrate. The gas-permeability of the disclosed water-based hot-melt adhesive coated nonwoven fabric is less than 170 seconds (TAPPI (Technical Association of the Pulp and Paper industry) T-460), and the seal strength is greater than 265 g/15 mm (ASTM (American Society for Testing and Materials) F-88).

As used herein, the "seal strength" refers to the peel strength required to separate two sealed flexible sheet materials, the strength is measured according to ASTM F88 in a "T-peel" configuration at an elongation speed of 200 mm/min.

As used herein, the "gas-permeability" refers to the air resistance of gas passing through a gas-permeable sheet material. According to the TAPPI T-460, it measures the time required for 100 cubic centimeters of air passing through a 1 inch square of sample at a pressure difference of approximately 1.22 kPa.

The suitable polyolefin spunbonded nonwoven fabric substrate for the disclosed gas-permeable hot-melt sealing film can be the nonwoven fabric commonly used in the healthcare packaging, DuPont Tyvek^{®} with a basis weight of from 40 g/m² to 80g/m², such as Tyvek^{®} 1073B, Tyvek^{®} 1059B, Tyvek^{®} 2FS and the like, but not limited thereto.

In the disclosed water-based hot-melt adhesive coated nonwoven fabric, the water-based hot-melt adhesive can be coated evenly over all the surface of the polyolefin spunbonded nonwoven fabric substrate or partially at specific area thereof, and the coating amount is in the range of from 10 g/m² to 20 g/m², and preferably is in the range of from 12 g/m² to 19.5 g/m².

The packaging materials suitably sealed with the disclosed water-based hot-melt adhesive coated nonwoven fabric can be flexible sheets or the blister containers made from, for example, PET (polyethylene terephthalate), PETG (polyethylene terephthalate glycol), PVC (polyvinyl chloride), APET (amorphous polyethylene terephthalate), PS (polystyrene), PP (polypropylene), PC (polycarbonate), PE (polyethylene), nylon, but not limited thereto.

The disclosed water-based hot-melt adhesive coated nonwoven fabric can be heat sealed with a packaging material as the flexible sheets or the blister containers described above at the temperature of from 90°C to 150°C. The seal strength of the sealed packaging is greater than 265 g/15 mm and preferably, is greater than 270 g/15 mm.

The preparation method of the disclosed water-based hot-melt adhesive coated nonwoven fabric comprises adding water-based ionomer, wax particles, tackifier particles and water as solvent into the hydrophilic-modified water-based polyolefin resin, mixing and stirring evenly to form a water-based hot-melt adhesive emulsion. The prepared water-based hot-melt adhesive emulsion can be coated on a polyolefin spunbonded nonwoven fabric substrate and dried at the temperature of from 60°C to 100°C to evaporate the solvent to form a water-based hot-melt adhesive coated nonwoven fabric. The water-based hot-melt adhesive can be coated by the coating processes commonly used in this technical field, for example, roll coating process, blade coating process, roller coating process, spin coating process, spray coating process, slot-die coating process or air knife coating process, but not limited to this.

The disclosed water-based hot-melt adhesive coated nonwoven fabric can be heat sealed with flexible sheets or blister containers at the peripheral edges to prepare a healthcare device packaging with sufficient gas-permeability for steam sterilization or ethylene oxide (EO) sterilization and sufficient reliable seal strength and peelability. When peeling open the heat sealing area of the healthcare packaging, the water-based hot-melt adhesive layer is cleanly split to reduce the fiber tear occurred at the non-woven fabric, which may cause contamination to the healthcare devices.

The present invention will be explained in further detail with reference to the examples. However, the present invention is not limited to these examples.

### Example

The materials used in the Example were as below:
WPE-09838: polyethylene emulsion, melting point: 145°C, glass transition temperature (Tg): -120°C, solid content: 25%, solvent: water, commercially obtained from Kelly Chemicals Co., Taiwan.
DL 326PA: styrene butadiene latex, melting point: 230.9°C, glass transition temperature (Tg): -42.1°C, solid content: 50%, solvent: water, commercially obtained from Trinseo LLC, US.
VINNAPAS^{®} EAF-68: ethylene-vinyl acetate-acrylate copolymer dispersion, melting point: 240°C, glass transition temperature (Tg): -35°C, solid content: 59.5%, solvent: water, commercially obtained from Wacker Chemie AG, Germany.
Michem^{®} Prime 4983-40R: ethylene acrylic acid copolymer dispersion, melting point: 140°C, glass transition temperature (Tg): 6.2°C, solid content: 40%, solvent: water, commercially obtained from Michelman, Inc. US.
CHEMIPEARL^{™} S300: polyethylene ionomer emulsion, melting point: 96°C, glass transition temperature (Tg): -120°C, solid content: 35%, solvent: water, commercially obtained from Mitsui Chemicals, Inc., Japan.
CHEMIPEARL^{™} S500: polyethylene ionomer emulsion, melting point: 89°C, glass transition temperature (Tg): -120°C, solid content: 42%, solvent: water, commercially obtained from Mitsui Chemicals, Inc., Japan.
Aquacer 497: Paraffin-based wax emulsion, solid content: 50%, solvent: water, commercially obtained from BYK-Chemie GmbH, Germany.
Sasolwax Spray 30G-M: Fischer-Tropsch fine micronized wax powder, melting point: from 96°C to 100°C, glass transition temperature (Tg): about -120°C, average particle size: from 9 µm to 11 µm, commercially obtained from Sasol Limited, South Africa;
Cleartack^{®} W-140: C9 petroleum resin, soft point: 140°C, glass transition temperature (Tg): 90°C, number-average molecular weight (Mn): 1200 g/mol, average particle size: from 5 µm to 10 µm, commercially obtained from Cray Valley Ltd, US;
BYK-3450: polyether-modified siloxane-based surfactant, commercially obtained from BYK-Chemie GmbH, Germany;
TEGO^{®} Wet 240: siloxane-based substrate wetting additive, commercially obtained from Evonik Industries GmbH, Germany.
Rheovis^{®} AS 1125: acrylic thickener, solid content: 25%, solvent: water, commercially obtained from BASF SE, Germany;
BYK-025: silicone-based defoamer, solid content: 18.5%, solvent: dipropylene glycol monomethyl ether, commercially obtained from BYK-Chemie GmbH, Germany;
Tyvek^{®} 2FS: high density polyethylene spunbonded nonwoven fabric substrate, commercially obtained from DuPont de Nemours, Inc., US.

### Example 1

29.84 weight parts of polyethylene emulsion (WPE-09838), 17.5 weight parts of polyethylene ionomer emulsion (CHEMIPEARL^{™} S500), 7.49 weight parts of Fischer-Tropsch synthetic wax particles (Sasolwax Spray 30G-M), 7.49 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 2

29.84 weight parts of polyethylene emulsion (WPE-09838), 1.6 weight parts of polyethylene ionomer emulsion (CHEMIPEARL^{™} S500), 2.57 weight parts of Fischer-Tropsch synthetic wax particles (Sasolwax Spray 30G-M), 2.57 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 3

29.84 weight parts of polyethylene emulsion (WPE-09838), 3.9 weight parts of polyethylene ionomer emulsion (CHEMIPERALTM S300), 2.24 weight parts of Fischer-Tropsch synthetic wax particles (Sasolwax Spray 30G-M), 2.24 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 4

29.84 weight parts of polyethylene emulsion (WPE-09838), 1.8 weight parts of polyethylene ionomer emulsion (CHEMIPEARL^{™} S500), 3.1 weight parts of Fischer-Tropsch synthetic wax particles (Sasolwax Spray 30G-M), 3.1 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 5

29.84 weight parts of polyethylene emulsion (WPE-09838), 14.8 weight parts of polyethylene ionomer emulsion (CHEMIPEARL^{™} S500), 5.13 weight parts of Fischer-Tropsch synthetic wax particles (Sasolwax Spray 30G-M), 5.13 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 6

29.84 weight parts of polyethylene emulsion (WPE-09838), 8.0 weight parts of polyethylene ionomer emulsion (CHEMIPERALTM S300), 3.94 weight parts of Fischer-Tropsch synthetic wax particles (Sasolwax Spray 30G-M), 3.94 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 7

44.6 weight parts of polyethylene emulsion (WPE-09838), 1.5 weight parts of polyethylene ionomer emulsion (CHEMIPEARL^{™} S500), 3.2 weight parts of paraffin-based wax emulsion (Aquacer 497), 3.76 weight parts of Fischer-Tropsch synthetic wax particles (Sasolwax Spray 30G-M), 3.76 weight parts of C9 petroleum resin micropowders (Cleartack^{®} W-140), 0.12 weight parts of surfactant (BYK-3450), 2.86 weight parts of thickener (AS-1125), 0.08 weight parts of defoamer (BYK-025) and 87.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 8

29.76 weight parts of polyethylene emulsion (WPE-09838), 1.11 weight parts of polyethylene ionomer emulsion (CHEMIPEARL^{™} S500), 0.62 weight parts of paraffin-based wax emulsion (Aquacer 497), 3.25 weight parts of Fischer-Tropsch synthetic wax particles (Sasolwax Spray 30G-M), 3.25 weight parts of C9 petroleum resin micropowders (Cleartack^{®} W-140), 0.05 weight parts of surfactant (BYK-3450), 1.56 weight parts of thickener (AS-1125), 0.03 weight parts of defoamer (BYK-025) and 35 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 9

29.764 weight parts of polyethylene emulsion (WPE-09838), 1.09 weight parts of polyethylene ionomer emulsion (CHEMIPEARL^{™} S500), 0.92 weight parts of paraffin-based wax emulsion (Aquacer 497), 3.19 weight parts of Fischer-Tropsch synthetic wax particles (Sasolwax Spray 30G-M), 3.19 weight parts of C9 petroleum resin micropowders (Cleartack^{®} W-140), 0.05 weight parts of surfactant (BYK-3450), 1.53 weight parts of thickener (AS-1125), 0.03 weight parts of defoamer (BYK-025) and 35.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 10

29.76 weight parts of polyethylene emulsion (WPE-09838), 1.11 weight parts of polyethylene ionomer emulsion (CHEMIPEARL^{™} S500), 1.53 weight parts of paraffin-based wax emulsion (Aquacer 497), 3.06 weight parts of Fischer-Tropsch synthetic wax particles (Sasolwax Spray 30G-M), 3.06 weight parts of C9 petroleum resin micropowders (Cleartack^{®} W-140), 0.05 weight parts of surfactant (BYK-3450), 1.46 weight parts of thickener (AS-1125), 0.03 weight parts of defoamer (BYK-025) and 35.78 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 11

29.76 weight parts of polyethylene emulsion (WPE-09838), 1.31 weight parts of polyethylene ionomer emulsion (CHEMIPERAL^{™} S300), 0.62 weight parts of paraffin-based wax emulsion (Aquacer 497), 3.25 weight parts of Fischer-Tropsch synthetic wax particles (Sasolwax Spray 30G-M), 3.25 weight parts of C9 petroleum resin micropowders (Cleartack^{®} W-140), 0.05 weight parts of surfactant (BYK-3450), 1.66 weight parts of thickener (AS-1125), 0.03 weight parts of defoamer (BYK-025) and 35.64 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 12

29.76 weight parts of polyethylene emulsion (WPE-09838), 1.32 weight parts of polyethylene ionomer emulsion (CHEMIPERAL^{™} S300), 0.91 weight parts of paraffin-based wax emulsion (Aquacer 497), 3.18 weight parts of Fischer-Tropsch synthetic wax particles (Sasolwax Spray 30G-M), 3.18 weight parts of C9 petroleum resin micropowders (Cleartack^{®} W-140), 0.05 weight parts of surfactant (BYK-3450), 1.67 weight parts of thickener (AS-11125), 0.03 weight parts of defoamer (BYK-025) and 35.5 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 13

29.76 weight parts of polyethylene emulsion (WPE-09838), 1.3 weight parts of polyethylene ionomer emulsion (CHEMIPERAL^{™} S300), 3.06 weight parts of Fischer-Tropsch synthetic wax particles (Sasolwax Spray 30G-M), 1.53 weight parts of paraffin-based wax emulsion (Aquacer 497), 3.06 weight parts of C9 petroleum resin micropowders (Cleartack^{®} W-140), 0.05 weight parts of surfactant (BYK-3450), 1.61 weight parts of thickener (AS-1125), 0.03 weight parts of defoamer (BYK-025) and 35.45 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Example 14

29.76 weight parts of polyethylene emulsion (WPE-09838), 1.09 weight parts of polyethylene ionomer emulsion (CHEMIPEARL^{™} S500), 0.92 weight parts of paraffin-based wax emulsion (Aquacer 497), 3.19 weight parts of Fischer-Tropsch synthetic wax particles (Sasolwax Spray 30G-M), 3.19 weight parts of C9 petroleum resin micropowders (Cleartack^{®} W-140), 0.05 weight parts of surfactant (BYK-3450), 1.53 weight parts of thickener (AS-1125), 0.03 weight parts of defoamer (BYK-025) and 35.8 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Comparative Example 1

7.68 weight parts of styrene butadiene latex (DL 326PA), 7.2 weight parts of ethylene acrylic acid copolymer dispersion (Michem^{®} Prime 4983-40R), 1.6 weight parts of ethylene-vinyl acetate-acrylate copolymer dispersion (VINNAPAS^{®} EAF-68), 7.52 weight parts of C9 petroleum resin micropowders (Cleartack^{®} W-140), 0.06 weight parts of wetting additive (TEGO^{®} Wet 240), 0.04 weight parts of defoamer (BYK-025) and 41.6 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 80°C for 2 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

### Comparative Example 2

29.76 weight parts of polyethylene emulsion (WPE-09838), 3.23 weight parts of Fischer-Tropsch synthetic wax particles (Sasolwax Spray 30G-M), 3.23 weight parts of C9 petroleum resin micropowders (Cleartack^{®} W-140), 0.05 weight parts of surfactant (BYK-3450), 1.24 weight parts of thickener (AS-1125), 0.03 weight parts of defoamer (BYK-025) and 33.54 weight parts of deionized water were mixed and stirred for 1 hour for evenly dispersion to prepare a water-based hot-melt adhesive solution.

The obtained water-based hot-melt adhesive solution was coated on a high-density polyethylene spunbonded nonwoven fabric substrate (Tyvek^{®} 2FS) and dried at 100°C for 3 minutes to form a water-based hot-melt adhesive coating layer on the high-density polyethylene spunbonded nonwoven fabric substrate to prepare a water-based hot-melt adhesive coated nonwoven fabric.

The gas-permeability, layer-peeling, heat seal strength and reliability of the obtained water-based hot-melt adhesive coated nonwoven fabric were evaluated by the evaluation methods described hereinafter. The results were shown in Table 1.

Evaluation methods of the coating amount, gas-permeability, heat seal strength, layer-peeling and reliability are as below:

Coating amount: according to EN ISO 536 standard test, samples were obtained by the Sample Cutter 240/100 manufactured by Hans Schmidt & Co GmbH, Germany. The samples from the water-based hot-melt adhesive coated nonwoven fabric and the uncoated high-density polyethylene spunbonded nonwoven fabric substrate were weighted, respectively. The difference between the weights of the water-based hot-melt adhesive coated nonwoven fabric and the uncoated high-density polyethylene spunbonded nonwoven fabric substrate was the mass of coating amount per unit of area (g/m² (gsm)).

Gas-permeability: measure the average time required for 100 cubic centimeters of air to pass through the gas-permeable hot-melt sealing film according to the TAPPI T-460 standard by Gurley type Densometer Model 4980-D, manufactured by Lesson Industrial Co., Ltd, Taiwan.

Seal strength evaluation used for Examples 1 to 13 and Comparative Example 1 to 2: laminate HDPE (high-density polyethylene) film, Teflon fabric and the water-based hot-melt adhesive coated nonwoven fabric obtained from Examples 1 to 13 and Comparative Example 1 to 2 were heat pressed by Heat-sealing Machine BS-25 manufactured by Dah Bah Machinery Ind. Inc. Taiwan. The temperature of the top plate is set at 123°C, the temperature of the bottom plate is set at room temperature, the pressure of heat press is 5 Kg and the time is 1.5 second. Cut the heat sealed laminate to 15 mm wide strip sample. The sample was measured the maximum value of the tensile force as the initial seal strength according to the description of ASTM-88 by Tensile Strength Tester AI-3000 manufactured by Gotech Testing Machines Inc. Taiwan.

Seal strength evaluation used for Example 14: A PETG blister and the water-based hot-melt adhesive coated nonwoven fabric obtained from Example 14 were heat pressed blister sealing machine (WSB400HLS, manufactured by WELL SHENG MACHINERYCO., LTD., Taiwan). The temperature of heat press was set at 120°C, the pressure of heat press was 5.5 Kg and the time was 6 second. Cut the heat sealed laminate to 15 mm wide strip sample. The sample was measured the maximum value of the tensile force as the initial seal strength according to the description of ASTM-88 by Tensile Strength Tester AI-3000 manufactured by Gotech Testing Machines Inc. Taiwan.

Layer-peeling evaluation: the HDPE film or the PETG blister was peeled away from the water-based hot-melt adhesive coated nonwoven fabric by hand from the above heat-sealed samples and observed if any fiber tear is occurred on the high-density polyethylene spunbonded nonwoven fabric substrate. If no fiber tear is observed on the substrate, the evaluation is ∘, and if fiber tear is observed, the evaluation is ×.

Reliability test: the sample for the above seal strength evaluation was placed into an oven for reliability test at a temperature of 65°C for 4 weeks. After 4 weeks, the sample was measured the maximum value of the tensile force according to ASTM-F-88 standard test and calculated the difference from the initial seal strength.

**Table 1**

| Example / Comparative Example | Weight of coating layer (gsm) | Gas-permeability (s) | Layer-peeling | Initial seal strength (gf/15mm) | Seal strength after reliability test (gf/15mm) | Difference of seal strength |
|---|---|---|---|---|---|---|
| Example 1 | 13.7 | 56 | ○ | 271 | 273 | +2 |
| Example 2 | 17.4 | 144 | ○ | 383 | 322 | -61 |
| Example 3 | 11.9 | 160 | ○ | 388 | 322 | -66 |
| Example 4 | 17.5 | 58 | ○ | 368 | 343 | -25 |
| Example 5 | 14.3 | 104 | ○ | 286 | 285 | -1 |
| Example 6 | 16.3 | 96 | ○ | 334 | 334 | 0 |
| Example 7 | 14.5 | 95 | ○ | 368 | 349 | -19 |
| Example 8 | 15.5 | 100 | ○ | 312 | 342 | +30 |
| Example 9 | 17.7 | 78 | ○ | 432 | 358 | -74 |
| Example 10 | 17.2 | 76 | ○ | 333 | 367 | +34 |
| Example 11 | 17.3 | 92 | ○ | 329 | 317 | -12 |
| Example 12 | 16.9 | 85 | ○ | 389 | 404 | +15 |
| Example 13 | 17.2 | 92 | ○ | 355 | 332 | -23 |
| Example 14 | 17.7 | 73 | ○ | 730 | 358 | -12 |
| Comparative Example 1 | 10.0 | 60 | × | 158 | - | - |
| Comparative Example 2 | 18.3 | 61 | ○ | 374 | 211 | -163 |

From Table 1, the water-based hot-melt adhesive coated nonwoven fabric prepared by Example 1 to Example 14 provided satisfied gas-permeability and sufficient seal strength after heat sealing with HDPE films or PETG blisters. When the HDPE film or PETG blister was peeling away, no fiber tear was occurred on the high-density polyethylene spunbonded nonwoven fabric substrate. Furthermore, the obtained water-based hot-melt adhesive coated nonwoven fabrics from Example 1 to Example 14 provided sufficient weatherability and maintain the desired properties of a healthcare device packaging as the seal strength did not excessive increase or decrease after the reliability test. The water-based hot-melt adhesive coated nonwoven fabric obtained from Comparative Example 1 did not undergo the subsequent tests because the occurrence of fiber tear after peeling from the HDPE film. The sealing strength of the water-based hot-melt adhesive coated nonwoven fabric obtained from Comparative Example 2 showed a significant drop after the reliability test, which make the obtained fabric unsuitable to be used in healthcare device packaging.

## Claims

1. A water-based hot-melt adhesive, comprising: 20 weight parts to 60 weight parts of hydrophilic-modified water-based polyolefin resin, 1 weight parts to 30 weight parts of water-based ionomer, 10 weight parts to 30 weight parts of wax particles, and 10 weight parts to 30 weight parts of tackifier particles, wherein the term "weight parts" refers to weights of solely the resin, ionomer, wax particles or tackifier particles.

2. The water-based hot-melt adhesive as claimed in Claim 1, wherein a total amount of the wax particles and the tackifier particles is from 30wt% to 55wt% of a total weight of the water-based hot-melt adhesive.

3. The water-based hot-melt adhesive as claimed in Claim 1, wherein the water-based hot-melt adhesive comprises: 24 weight parts to 58 weight parts of the hydrophilic-modified water-based polyolefin resin, 2 weight parts to 28 weight parts of the water-based ionomer, 15 weight parts to 27 weight parts of the wax particles, and 15 weight parts to 27 weight parts of the tackifier particles, wherein a total amount of the wax particles and the tackifier particles is from 32wt% to 52wt% of a total weight of the water-based hot-melt adhesive.

4. The water-based hot-melt adhesive as claimed in Claim 1, wherein a particle size of each of the wax particles is in a range of from 3 µm to 20 µm.

5. The water-based hot-melt adhesive as claimed in Claim 1, wherein a particle size of each of the tackifier particles is in a range of from 3 µm to 35 µm.

6. The water-based hot-melt adhesive as claimed in Claim 1, wherein a weight ratio of the wax particles and the tackifier particles is in a range of from 0.6:1 to 3:1.

7. The water-based hot-melt adhesive as claimed in Claim 1, wherein a glass transition temperature (Tg) of the hydrophilic-modified water-based polyolefin resin is less than 0°C and a melting point thereof is more than 90°C, a glass transition temperature (Tg) of the water-based ionomer is less than 0°C and a melting point thereof is more than 80°C, a glass transition temperature (Tg) of the wax particles is less than 0°C and a melting point thereof is in a range of from 70°C to 180°C, and a glass transition temperature (Tg) of the tackifier particles is more than 0°C and a melting point thereof is in a range of from 90°C to 160°C.

8. The water-based hot-melt adhesive as claimed in Claim 1, wherein a glass transition temperature (Tg) of the water-based hot-melt adhesive is in a range of from - 120°C to -50°C.

9. The water-based hot-melt adhesive as claimed in Claim 1, wherein the hydrophilic-modified water-based polyolefin resin is selected from the group consisting of hydrophilic-modified water-based polyethylene resin, hydrophilic-modified water-based polypropylene resin, hydrophilic-modified water-based polybutylene resin and water-based oxidized polyethylene resin, or the combinations thereof.

10. The water-based hot-melt adhesive as claimed in Claim 1, wherein the water-based ionomer is selected from the group consisting of polyethylene ionomer, polypropylene ionomer, polyurethane ionomer and polystyrene butadiene ionomer, or the combinations thereof.

11. The water-based hot-melt adhesive as claimed in Claim 1, wherein the wax particles are selected from the group consisting of Fischer-Tropsch synthetic wax particles, polypropylene wax particles, polyethylene wax particles, oxidized polyethylene wax particles and microcrystalline wax particles, or the combinations thereof.

12. The water-based hot-melt adhesive as claimed in Claim 1, wherein the tackifier particles are selected from the group consisting of C5 petroleum resin micropowders, C9 petroleum resin micropowders and C5/C9 copolymerized petroleum resin micropowders, or the combinations thereof.

13. The water-based hot-melt adhesive as claimed in Claim 1, further comprising a water-based paraffin and, optionally, wherein the water-based hot-melt adhesive comprises 1 weight part to 10 weight parts of the water-based paraffin.

14. A water-based hot-melt adhesive coated nonwoven fabric comprising a polyolefin spunbonded nonwoven fabric substrate and a water-based hot-melt adhesive coating formed on at least one side of the polyolefin spunbonded nonwoven fabric substrate, wherein the water-based hot-melt adhesive for the water-based hot-melt adhesive coating comprises: 20 weight parts to 60 weight parts of hydrophilic-modified water-based polyolefin resin, 1 weight parts to 30 weight parts of water-based ionomer, 10 weight parts to 30 weight parts of wax particles, and 10 weight parts to 30 weight parts of tackifier particles, wherein the term "weight parts" refers to weights of solely the resin, ionomer, wax particles or tackifier particles.

15. The water-based hot-melt adhesive coated nonwoven fabric as claimed in Claim 14, wherein a gas-permeability of water-based hot-melt adhesive coated nonwoven fabric is less than 170 seconds and a seal strength thereof is greater than 265 g/15 mm; and/or
optionally, wherein a coating amount of the water-based hot-melt adhesive on the polyolefin spunbonded nonwoven fabric substrate is in a range of from 10 g/m² to 20 g/m².

## Patentansprüche

1. Ein wasserbasierter Schmelzklebstoff, der Folgendes beinhaltet: 20 Gewichtsteile bis 60 Gewichtsteile hydrophil modifiziertes wasserbasiertes Polyolefinharz, 1 Gewichtsteil bis 30 Gewichtsteile wasserbasiertes Ionomer, 10 Gewichtsteile bis 30 Gewichtsteile Wachspartikel und 10 Gewichtsteile bis 30 Gewichtsteile Klebrigmacherpartikel, wobei sich der Begriff "Gewichtsteile" auf Gewichte von ausschließlich dem Harz, dem lonomer, den Wachspartikeln oder den Klebrigmacherpartikeln bezieht.

2. Wasserbasierter Schmelzklebstoff gemäß Anspruch 1, wobei eine Gesamtmenge der Wachspartikel und der Klebrigmacherpartikel von 30 Gew.-% bis 55 Gew.-% eines Gesamtgewichts des wasserbasierten Schmelzklebstoffs beträgt.

3. Wasserbasierter Schmelzklebstoff gemäß Anspruch 1, wobei der wasserbasierte Schmelzklebstoff Folgendes beinhaltet: 24 Gewichtsteile bis 58 Gewichtsteile des hydrophil modifizierten wasserbasierten Polyolefinharzes, 2 Gewichtsteile bis 28 Gewichtsteile des wasserbasierten Ionomers, 15 Gewichtsteile bis 27 Gewichtsteile der Wachspartikel und 15 Gewichtsteile bis 27 Gewichtsteile der Klebrigmacherpartikel, wobei eine Gesamtmenge der Wachspartikel und der Klebrigmacherpartikel von 32 Gew.-% bis 52 Gew.-% eines Gesamtgewichts des wasserbasierten Schmelzklebstoffs beträgt.

4. Wasserbasierter Schmelzklebstoff gemäß Anspruch 1, wobei eine Partikelgröße jedes der Wachspartikel in einem Bereich von 3 µm bis 20 µm liegt.

5. Wasserbasierter Schmelzklebstoff gemäß Anspruch 1, wobei eine Partikelgröße jedes der Klebrigmacherpartikel in einem Bereich von 3 µm bis 35 µm liegt.

6. Wasserbasierter Schmelzklebstoff gemäß Anspruch 1, wobei ein Gewichtsverhältnis der Wachspartikel und der Klebrigmacherpartikel in einem Bereich von 0,6:1 bis 3:1 liegt.

7. Wasserbasierter Schmelzklebstoff gemäß Anspruch 1, wobei eine Glasübergangstemperatur (Tg) des hydrophil modifizierten wasserbasierten Polyolefinharzes weniger als 0 °C beträgt und ein Schmelzpunkt davon mehr als 90 °C beträgt, eine Glasübergangstemperatur (Tg) des wasserbasierten Ionomers weniger als 0 °C beträgt und ein Schmelzpunkt davon mehr als 80 °C beträgt, eine Glasübergangstemperatur (Tg) der Wachspartikel weniger als 0 °C beträgt und ein Schmelzpunkt davon in einem Bereich von 70 °C bis 180 °C liegt und eine Glasübergangstemperatur (Tg) der Klebrigmacherpartikel mehr als 0 °C beträgt und ein Schmelzpunkt davon in einem Bereich von 90 °C bis 160 °C liegt.

8. Wasserbasierter Schmelzklebstoff gemäß Anspruch 1, wobei eine Glasübergangstemperatur (Tg) des wasserbasierten Schmelzklebstoffs in einem Bereich von -120 °C bis -50 °C liegt.

9. Wasserbasierter Schmelzklebstoff gemäß Anspruch 1, wobei das hydrophil modifizierte wasserbasierte Polyolefinharz aus der Gruppe ausgewählt ist, die aus hydrophil modifiziertem wasserbasiertem Polyethylenharz, hydrophil modifiziertem wasserbasiertem Polypropylenharz, hydrophil modifiziertem wasserbasiertem Polybutylenharz und wasserbasiertem oxidiertem Polyethylenharz oder den Kombinationen davon besteht.

10. Wasserbasierter Schmelzklebstoff gemäß Anspruch 1, wobei das wasserbasierte lonomer aus der Gruppe ausgewählt ist, die aus Polyethylenionomer, Polypropylenionomer, Polyurethanionomer und Polystyrolbutadienionomer oder den Kombinationen davon besteht.

11. Wasserbasierter Schmelzklebstoff gemäß Anspruch 1, wobei die Wachspartikel aus der Gruppe ausgewählt sind, die aus synthetischen Fischer-Tropsch-Wachspartikeln, Polypropylenwachspartikeln, Polyethylenwachspartikeln, oxidierten Polyethylenwachspartikeln und mikrokristallinen Wachspartikeln oder den Kombinationen davon besteht.

12. Wasserbasierter Schmelzklebstoff gemäß Anspruch 1, wobei die Klebrigmacherpartikel aus der Gruppe ausgewählt sind, die aus C5-Erdölharzmikropulvern, C9-Erdölharzmikropulvern und copolymerisierten C5/C9-Erdölharzmikropulvern oder den Kombinationen davon besteht.

13. Wasserbasierter Schmelzklebstoff gemäß Anspruch 1, der ferner ein wasserbasiertes Paraffin beinhaltet und wobei der wasserbasierte Schmelzklebstoff optional 1 Gewichtsteil bis 10 Gewichtsteile des wasserbasierten Paraffins beinhaltet.

14. Ein mit wasserbasiertem Schmelzklebstoff beschichteter Vliesstoff, der ein Polyolefin-Spinnvliesstoffsubstrat und eine wasserbasierte Schmelzklebstoffbeschichtung, die auf mindestens einer Seite des Polyolefin-Spinnvliesstoffsubstrats gebildet ist, beinhaltet, wobei der wasserbasierte Schmelzklebstoff für die wasserbasierte Schmelzklebstoffbeschichtung Folgendes beinhaltet: 20 Gewichtsteile bis 60 Gewichtsteile hydrophil modifiziertes wasserbasiertes Polyolefinharz, 1 Gewichtsteil bis 30 Gewichtsteile wasserbasiertes Ionomer, 10 Gewichtsteile bis 30 Gewichtsteile Wachspartikel und 10 Gewichtsteile bis 30 Gewichtsteile Klebrigmacherpartikel, wobei sich der Begriff "Gewichtsteile" auf Gewichte von ausschließlich dem Harz, dem Ionomer, den Wachspartikeln oder den Klebrigmacherpartikeln bezieht.

15. Mit wasserbasiertem Schmelzklebstoff beschichteter Vliesstoff gemäß Anspruch 14, wobei eine Gasdurchlässigkeit des mit wasserbasiertem Schmelzklebstoff beschichteten Vliesstoffs weniger als 170 Sekunden beträgt und eine Siegelfestigkeit davon größer als 265 g/15 mm ist; und/oder
wobei optional eine Beschichtungsmenge des wasserbasierten Schmelzklebstoffs auf dem Polyolefin-Spinnvliesstoffsubstrat in einem Bereich von 10 g/m² bis 20 g/m² liegt.

## Revendications

1. Un adhésif thermofusible à base aqueuse, comprenant : 20 parties en poids à 60 parties en poids de résine polyoléfinique à base aqueuse modifiée hydrophile, 1 partie en poids à 30 parties en poids d'ionomère à base aqueuse, 10 parties en poids à 30 parties en poids de particules de cire, et 10 parties en poids à 30 parties en poids de particules de tackifiant, dans lequel le terme « parties en poids » désigne les poids uniquement de la résine, de l'ionomère, des particules de cire ou des particules de tackifiant.

2. L'adhésif thermofusible à base aqueuse tel que revendiqué dans la revendication 1, dans lequel une quantité totale des particules de cire et des particules de tackifiant va de 30 % en poids à 55 % en poids d'un poids total de l'adhésif thermofusible à base aqueuse.

3. L'adhésif thermofusible à base aqueuse tel que revendiqué dans la revendication 1, l'adhésif thermofusible à base aqueuse comprenant : 24 parties en poids à 58 parties en poids de la résine polyoléfinique à base aqueuse modifiée hydrophile, 2 parties en poids à 28 parties en poids de l'ionomère à base aqueuse, 15 parties en poids à 27 parties en poids des particules de cire, et 15 parties en poids à 27 parties en poids des particules de tackifiant, dans lequel une quantité totale des particules de cire et des particules de tackifiant va de 32 % en poids à 52 % en poids d'un poids total de l'adhésif thermofusible à base aqueuse.

4. L'adhésif thermofusible à base aqueuse tel que revendiqué dans la revendication 1, dans lequel une taille de particule de chacune des particules de cire est dans une plage allant de 3 µm à 20 µm.

5. L'adhésif thermofusible à base aqueuse tel que revendiqué dans la revendication 1, dans lequel une taille de particule de chacune des particules de tackifiant est dans une plage allant de 3 µm à 35 µm.

6. L'adhésif thermofusible à base aqueuse tel que revendiqué dans la revendication 1, dans lequel un rapport en poids des particules de cire et des particules de tackifiant est dans une plage allant de 0,6/1 à 3/1.

7. L'adhésif thermofusible à base aqueuse tel que revendiqué dans la revendication 1, dans lequel une température de transition vitreuse (Tg) de la résine polyoléfinique à base aqueuse modifiée hydrophile est inférieure à 0 °C et un point de fusion de celle-ci est supérieur à 90 °C, une température de transition vitreuse (Tg) de l'ionomère à base aqueuse est inférieure à 0 °C et un point de fusion de celui-ci est supérieur à 80 °C, une température de transition vitreuse (Tg) des particules de cire est inférieure à 0 °C et un point de fusion de celles-ci est dans une plage allant de 70 °C à 180 °C, et une température de transition vitreuse (Tg) des particules de tackifiant est supérieure à 0 °C et un point de fusion de celles-ci est dans une plage allant de 90 °C à 160 °C.

8. L'adhésif thermofusible à base aqueuse tel que revendiqué dans la revendication 1, dans lequel une température de transition vitreuse (Tg) de l'adhésif thermofusible à base aqueuse est dans une plage allant de -120 °C à -50 °C.

9. L'adhésif thermofusible à base aqueuse tel que revendiqué dans la revendication 1, dans lequel la résine polyoléfinique à base aqueuse modifiée hydrophile est choisie dans le groupe constitué de résine de polyéthylène à base aqueuse modifiée hydrophile, résine de polypropylène à base aqueuse modifiée hydrophile, résine de polybutylène à base aqueuse modifiée hydrophile et résine de polyéthylène oxydé à base aqueuse, ou de leurs combinaisons.

10. L'adhésif thermofusible à base aqueuse tel que revendiqué dans la revendication 1, dans lequel l'ionomère à base aqueuse est choisi dans le groupe constitué d'ionomère de polyéthylène, ionomère de polypropylène, ionomère de polyuréthane et ionomère de polystyrène-butadiène, ou de leurs combinaisons.

11. L'adhésif thermofusible à base aqueuse tel que revendiqué dans la revendication 1, dans lequel les particules de cire sont choisies dans le groupe constitué de particules de cire synthétique Fischer-Tropsch, particules de cire de polypropylène, particules de cire de polyéthylène, particules de cire de polyéthylène oxydé et particules de cire microcristalline, ou de leurs combinaisons.

12. L'adhésif thermofusible à base aqueuse tel que revendiqué dans la revendication 1, dans lequel les particules de tackifiant sont choisies dans le groupe constitué de micropoudres de résine de pétrole C5, micropoudres de résine de pétrole C9 et micropoudres de résine de pétrole copolymérisée C5/C9, ou de leurs combinaisons.

13. L'adhésif thermofusible à base aqueuse tel que revendiqué dans la revendication 1, comprenant en outre une paraffine à base aqueuse et, facultativement, l'adhésif thermofusible à base aqueuse comprenant 1 partie en poids à 10 parties en poids de la paraffine à base aqueuse.

14. Un tissu non tissé revêtu d'adhésif thermofusible à base aqueuse comprenant un substrat de tissu non tissé filé-lié en polyoléfine et un revêtement d'adhésif thermofusible à base aqueuse formé sur au moins une face du substrat de tissu non tissé filé-lié en polyoléfine, dans lequel l'adhésif thermofusible à base aqueuse pour le revêtement d'adhésif thermofusible à base aqueuse comprend : 20 parties en poids à 60 parties en poids de résine polyoléfinique à base aqueuse modifiée hydrophile, 1 partie en poids à 30 parties en poids d'ionomère à base aqueuse, 10 parties en poids à 30 parties en poids de particules de cire, et 10 parties en poids à 30 parties en poids de particules de tackifiant, dans lequel le terme « parties en poids » désigne les poids uniquement de la résine, de l'ionomère, des particules de cire ou des particules de tackifiant.

15. Le tissu non tissé revêtu d'adhésif thermofusible à base aqueuse tel que revendiqué dans la revendication 14, dans lequel une perméabilité aux gaz d'un tissu non tissé revêtu d'adhésif thermofusible à base aqueuse est inférieure à 170 secondes et une force de scellage de celui-ci dépasse 265 g/15 mm ; et/ou
facultativement, dans lequel une quantité de revêtement de l'adhésif thermofusible à base aqueuse sur le substrat de tissu non tissé filé-lié en polyoléfine est dans une plage allant de 10 g/m² à 20 g/m².
